# EUROPEAN PATENT SPECIFICATION

(11) **EP 1 640 622 B1**
(45) Date of publication and mention of the grant of the patent: **25.11.2009**
(21) Application number: 04745896.3
(22) Date of filing: 15.06.2004
(51) Int. Cl.: F16B 35/00, C22C 23/00, C22F 1/06, B21H 3/06, B21K 1/56, B21J 5/00

(54) **MAGNESIUM-BASE ALLOY SCREW AND METHOD OF MANUFACTURING THE SAME**
SCHRAUBE AUS EINER AUF MAGNESIUM BASIERENDEN LEGIERUNG UND HERSTELLUNGSVERFAHREN DAFÜR
VIS EN ALLIAGE A BASE DE MAGNESIUM ET PROCEDE POUR LA PRODUIRE

(30) Priority: 19.06.2003 JP 2003175286; 15.07.2003 JP 2003275005; 06.01.2004 JP 2004001071
(43) Date of publication of application: 29.03.2006
(60) Divisional application: 08016896.6
(73) Proprietor: Sumitomo Electric Industries, Ltd., Osaka-shi, Osaka 541-0041 (JP)
(72) Inventor: OISHI, Yukihiro, c/o Itami Works of Sumitomo Elec.Ind., Ltd, Itami-shi, Hyogo 664-0016 (JP); KAWABE, Nozomu, c/o Itami Works of Sumitomo Elec.Ind., Ltd., Itami-shi, Hyogo 664-0016 (JP); HASHIMOTO, Kenzaburo, c/o Maruemu Works Co., Ltd., Daito-shi, Osaka 5740015 (JP); FUKUDA, Kenji, c/o Maruemu Works Co., Ltd, Daito-shi, Osaka 5740015 (JP)
(74) Representative: Cross, Rupert Edward Blount
(86) International application number: PCT/JP2004/008342
(87) International publication number: WO 2004/113742

(56) References cited:
- WO-A-02/099148
- WO-A-2004/106576
- JP-A- 5 504 602
- JP-A- 7 278 717
- JP-A- 11 172 359
- JP-A- 60 221 142
- JP-A- 2000 343 178
- A. THUM, H. LORENZ: "Versuche an Schrauben aus Magnesium-Legierungen" VDI-ZEITSCHRIFT, vol. 84, no. 36, 7 September 1940 (1940-09-07), pages 667-673, XP009071452
- PATENT ABSTRACTS OF JAPAN vol. 2002, no. 02, 2 April 2002 (2002-04-02) & JP 2001 269746 A (KURIMOTO LTD; KISHIWADA STAINLESS KK; AZUMA KENJI), 2 October 2001 (2001-10-02)
- PATENT ABSTRACTS OF JAPAN vol. 2000, no. 14, 5 March 2001 (2001-03-05) & JP 2000 320518 A (NOJIGAWA TERUFUMI), 24 November 2000 (2000-11-24)

## Description

### Technical Field

The present invention relates to a method of producing a screw made of magnesium-based alloy.

### Background Art

The magnesium-based alloy is lighter than aluminum in weight, and has more excellent specific strength and specific rigidity as compared with steel or aluminum and thus, the magnesium-based alloy is widely used for aircraft parts, automobile parts, bodies of various electrical products and the like.

However, since Mg and its alloy have hexagonal close-packed lattice (hcp) structure, they have poor ductility and their plastic workability is extremely poor at room temperature. For example, when general metal material is used, production of screw is carried out at room temperature, but when magnesium-based alloy is used, forging such as screw working can not be carried out at room temperature.

The workability of the magnesium-based alloy is largely varied depending upon the temperature. Severe plastic working such as screw working can be carried out by increasing the temperature of a raw material. Conventionally, when a screw is to be produced using magnesium-based alloy, the raw material is heated to such a temperature that the plastic working can be carried out at the time of screw working. For example, Patent Documents 1 to 3 describe techniques in which a screw is processed while heating a magnesium-based alloy raw material to such a temperature that the raw material generates superplasticity phenomenon or plastic workability is increased.

Patent Document 1: Japanese Patent Application Laid-open No. 2000-283134
Patent Document 2: Japanese Patent Application Laid-open No. 2000-343178
Patent Document 3: Japanese Patent Application Laid-open No. 2001-269746
WO02/099148 relates to a magnesium base alloy wire and a method for its production. This document describes how drawing a magnesium-based alloy wire results in a wire excelling in strength and toughness.

### Disclosure of the Invention

### Problems to be Solved by the Invention

The temperature at which superplasticity phenomenon is generated or plastic workability is increased is as high as 250°C or higher. Therefore, according to the conventional method, molds (working tools) such as a holding die and punch to be used at the time of screw working are exposed to high temperature, and there is a problem that the lifetimes of the working tools are largely shortened and a screw can not be produced with excellent productivity.

Conventionally, when severe working such as screw working is carried out to obtain a screw made of magnesium-based alloy, it is necessary to heat extruded material made of magnesium-based alloy which is a work piece to be heat treated to 250°C or higher as described in Patent Documents 1 to 3. Therefore, heat equipment for high temperature as high as 250°C or higher is required, working tools used for the screw working are also exposed to high temperature and their lifetimes are shortened, and this increases the producing cost. Thus, it is by no means preferable for industrial production to heat the materials to 250°C or higher.

In recent years, it is required to further enhance the screw strength. A screw obtained by heating extruded material to 250°C or higher to be screw produced has limitation for enhancing its strength. Thus, an appropriate method for enhancing the strength of a screw made of magnesium-based alloy is required.

Hence, it is a main object of the present invention to provide a producing method of a magnesium-based alloy screw capable of producing magnesium-based alloy screw with excellent productivity.

### Means for Solving the Problems

It is generally considered it difficult to carry out severe working such as screw working at a temperature lower than 250°C when magnesium-based alloy is used. The present inventors variously researched about the magnesium-based alloy and as a result, they found out that a screw can be produced even at a temperature lower than 250°C by using a wire which is obtained by specific drawing previously, and they achieved this invention. The inventors define this invention based on a point of view that the obtained magnesium-based alloy screw has excellent tensile characteristics.

Accordingly, the present invention provides a method of producing a magnesium-based alloy screw comprising: a preparing step in which a drawn wire is prepared made of a magnesium-based alloy comprising either: (a) Al: 0.1 to 12% by mass and one or more of Mn: 0.1 to 2.0% by mass, Zn: 0.1 to 5.0% by mass and Si: 0.1 to 5.0% by mass, reminder Mg and usual impurities or (b) Zn: 0.1 to 10% by mass and Zr: 0.1 to 2.0% by mass, reminder Mg and usual impurities; a head forging step in which a head working for forming a head portion is carried out by warm working to produce a screw blank; a thread rolling step in which thread rolling for forming screw thread on the screw blank is carried out by warm working to produce a screw; and optionally a thermal treatment step in which a screw subjected to the thread rolling is subjected to thermal treatment at 100°C or higher and lower than 350°C, wherein the head working in the head forging step is carried out using a holding die which fixes the drawn wire and a punch which forms a head portion of the screw, the holding die and the punch are heated, in which at least the holding die is heated to 140°C or higher and 250°C or lower, thereby heating the wire to 140°C or higher and lower than 250°C. That is, a producing method of a magnesium-based alloy screw of the present invention includes a head forging step in which a head working for forming a head portion of a screw on a wire made of magnesium-based alloy obtained by drawing is carried out by warm working to produce a screw blank, and a thread rolling step in which thread rolling for forming screw thread on the screw blank is carried out by warm working to produce a screw. The head working in the head forging step is carried out using a holding die which fixes the wire and a punch which forms a head portion of the screw. The holding die and the punch are heated, and at least the holding die is heated to 140°C or higher and 250°C or lower, thereby heating the wire to 140°C or higher and lower than 250°C.

Conventionally, when a screw is obtained using magnesium-based alloy, extruded material is used as a work piece. If the extruded material is not heated to 250°C or higher, the screw can not be produced. Whereas, in the present invention, to produce a screw at heating temperature lower than 250°C, a wire obtained by a later-described specific drawing is defined to be used.

In extruded material, the average crystal grain diameter of alloy is 20 µm or more and variation is great. In drawn material obtained by the drawing, the average crystal grain diameter of alloy is 10 µm or less and the maximum crystal grain diameter is 15 µm or less, and the drawn material has uniform and fine structure. Further, drawn material has excellent size precision and small deviated diameter difference as compared with extruded material. Thus, when a wire is heated through working tools such as the holding die which works a screw, it is possible to heat the same stably and reliably. Further, as compared with extruded material, drawn material can be formed into a long linear material and thus, the linear material can be supplied to the holding die continuously. Therefore, procedure from the cutting operation of the linear material to the forming operation of the head portion of a screw can continuously be carried out. According to the present invention, the heating temperature is lowered, i.e., a screw is produced at a temperature lower than 250°C by using the drawn material having the above-described characteristics.

The present invention will be explained in more detail below.
In the invention, a wire made of magnesium-based alloy is preferably obtained by cutting a linear material having circular cross section. The drawing for obtaining the linear material is carried under such conditions that a temperature rising speed to working temperature is 1°C/sec to 100°C/sec, working temperature is 50°C or higher and 200°C or lower (preferably 150°C or lower), working ratio is 10% or more per one drawing (one pass), drawing speed is 1m/sec or more, and after extruded material is drawn, the obtained linear material is heated to 100°C or higher and 400°C or lower, more preferably 150°C or higher and 400°C or lower. This heating annealing is effective for recovery of strain induced by the drawing, and for grain refinement by recrystallization. It is preferable that keeping time of this heating temperature is about 5 to 20 minutes. By carrying out such a specific drawing, the alloy structure can be finely divided, more concretely, the average crystal grain diameter can be reduced to 10 µm or less, and the maximum crystal grain diameter can be reduced to 15 µm or less. Plastic workability of fine-grained material can be enhanced even if the heating temperature of the wire is lower than 250°C, and a desired screw can be obtained.

Using the wire made of magnesium-based alloy obtained by the drawing, first, a screw blank (intermediate product in a state in which a head portion is formed but a shaft is not provided with screw thread) is produced by forging. At that time, the forging, more concretely, head working is carried out by warm working. As concrete temperature, a wire made of magnesium-based alloy is heated to 140°C or higher and lower than 250°C. If the heating temperature of the magnesium-based alloy wire is lower than 140°C, there is an adverse possibility that a crack or the like is generated during forging and the head working can not be carried out. Especially when a screw having a large diameter like M6 is produced, it is preferable that the heating temperature is 180°C or higher. As the heating temperature is higher, the plastic workability is enhanced but the lifetimes of working tools such as the holding die are shortened and thus, the upper limit value is set to 250°C while taking productivity into consideration. A screw can be produced at lower temperature, i.e., 180°C or lower depending upon a shape of the head portion to be formed (-screw, +screw, hexagonal screw, rivet and the like), working speed, screw size and the like.

In the head forging step, the head working can be preferably carried out using the holding die which fixes the magnesium-based alloy wire and the punch which forms the head portion of the screw, and working tools used for normal head working may be used. In the present invention, the wire is heated in the head forging step by heating both the holding die and punch. At that time, at least the holding die is heated to 140°C or higher and 250°C or lower. Heating both the holding die and punch to the above-described temperature makes it possible to heat the entire wire equally, which is preferable. If the heating temperature is lower than 140°C, the wire can not be heated to 140°C or higher, a crack or the like is generated on the wire during forging, head working can not be carried out, and if the heating temperature exceeds 250°C, the lifetime of the holding die or punch is shortened.

The holding die and the punch may be fixed to a die holder and a punch holder, respectively, and these holders may include heating means, and the holding die and the punch may be heated using these heating means. An example of the heating means is an electric heating type cartridge heater. It is preferable in terms of maintenance that the heating means is mounted in such a manner that the holder is formed with a hole and the heating means is inserted into the hole. The holder may include a temperature sensor so that temperature can be adjusted. Like the heating means, the temperature sensor may be mounted in such a manner that the holder is formed with a hole and the sensor is inserted into the hole.

When the holder is provided with the heating means, it is preferable that a heat insulator is disposed on at least a portion of an outer periphery of the holder, especially a portion of the outer periphery which comes into contact with a forging apparatus body in the holder to enhance the thermal efficiency by maintaining the heated state and while taking into consideration the thermal influence on the forging apparatus body on which the holder is mounted. A heat insulator may be disposed such as to surround the outer periphery of the holder.

When a head portion of a screw is formed in many stages while having a plurality of punches, it is preferable that a magnesium-based alloy wire is heated to the above temperature in any stages to form the head. At that time, if the plurality of punches are fixed to the same punch holder, heating means of the punches can commonly be used.

To form a head portion more efficiently, it is preferable to continuously carry out the following steps, i.e., a supplying step for supplying the magnesium-based alloy base wire obtained by the drawing to cutting means, a cutting step for cutting the supplied base wire by cutting means into pieces having constant length to obtain a wire as a work piece, a transferring step for transferring the cut wire to forging means, and a head forging step for forming a head portion of a screw using the transferred wire by the above-described procedure. Such procedure can be carried out using a forging apparatus capable of continuously working, and a known forging apparatus may be used.

It is preferable that the cutting means is provided with cutting die which holds a wire, this cutting die are fixed to the die holder which includes the heating means, and in the cutting step, the wire is held by the cutting die, the cutting die are heated by the heating means of the die holder, thereby heating the wire. Since the wire is heated in the cutting step, when the wire is transferred to the working tools such as the holding die or punch which form the head, the wire is heated to a certain temperature, this facilitates the more rapid heating operation in the head forging step, and the working speed can be increased. That is, the productivity can further be enhanced. Especially the holding die and the cutting die may be held by the same die holder so that the heating means of the holding die and the heating means of the cutting die can commonly be used. As a result, the holding die and the cutting die can be heated at the same time, and this is more efficient. Since the parts are commonly used, the number of parts of the forging apparatus can be reduced.

In the cutting step, since the wire is heated by heating the cutting die, the heating operation in the head forging step is facilitated, and the working speed is increased, and in addition to these effects, the cutting performance can also be enhanced. If the temperature of the wire is insufficient at the time of cutting, there is an adverse possibility that this causes inconveniences that the cut surface becomes rough, and cut leavings are generated at the time of the cutting. Since the cut surface affects the shape after the head working, it is preferable that the cut surface is smooth. If a head portion is formed including cut leavings, the shape after the head working is affected as described above; thus it is preferable that there are no cut leavings. In addition, if the wire is cut in a state in which the temperature of the wire is insufficient, precision of the cut wire is poor, and there is an adverse possibility that the insertion performance of the wire into the forging means (holding die) is deteriorated. Thus, it is required to sufficiently heat the wire to enhance the cutting performance. To make it possible to sufficiently heat the wire more quickly and more stably, it is preferable that wire heating means for directly heating the wire is provided, and the wire is heated by both heating the cutting die and heating using the wire heating means. The wire cutting performance is enhanced by indirect heating of the cutting die and direct heating by the wire heating means, the shape of the head portion is stabilized and the insertion performance of the wire into the holding die can be enhanced. When a screw having a large diameter is to be produced, it takes time to rise the temperature. This method is extremely effective because it is possible to heat the wire more quickly. An example of the wire heating means is a dryer for blowing hot air.

In this invention, drawn material having excellent plastic workability is used. This increases the working speed of the head working and enhances the productivity of screws. More concretely, the working speed of the head working can be increased to 100 mm/sec or higher. Generally, the working ratio of magnesium-based alloy depends on the working speed, and increasing the working speed makes it difficult to carry out the working having large working ratio. Whereas, according to the present invention, it is possible to form a screw with working speed of 100 mm/sec or higher that is at industrial production level at heating temperature as low as lower than 250°C by using the drawn material having excellent plastic workability.

A screw blank obtained by the head forging step is subj ected to thread rolling to form a screw thread, and a screw is produced. The thread rolling is carried out by warm working. More concretely, it is preferable that a screw blank made of magnesium-based alloy obtained through the head forging step is heated to 100°C or higher and lower than 250°C. If the temperature is lower than 100°C, there is an adverse possibility that a crack or the like is generated during the thread rolling and a screw thread can not be formed, and if the temperature exceeds 250°C, the lifetimes of the working tools are shortened.

The thread rolling may be carried out using thread rolling die, and working tools used for normal thread rolling may be used. In the thread rolling step, the screw blank is heated by heating the thread rolling die to 100°C or higher and lower than 250°C. If the temperature is lower than 100°C, the screw blank can not be heated to 100°C or higher, and if the temperature exceeds 250°C, the lifetime of the thread rolling die is shortened. Especially when a screw having a large diameter like M6 is produced, it is preferable to heat the screw blank to 150°C or higher.

The thread rolling die is directly provided with a heating means, and the thread rolling die is heated by the heating means. An example of the heating means is an electric heating type cartridge heater. It is preferable in terms of maintenance that the heating means is mounted in such a manner that the thread rolling die is formed with a hole and the heating means is inserted into the hole. The thread rolling die may include a temperature sensor so that temperature can be easily adjusted. Like the heating means, the temperature sensor may be mounted in such a manner that a hole is formed and the sensor is inserted into the hole.

When the thread rolling die is provided with the heating means, it is preferable that a heat insulator is disposed such as to surround an outer periphery of the thread rolling die, especially a portion of the outer periphery which comes into contact with a thread rolling apparatus body in the thread rolling die to enhance the thermal efficiency by maintaining the heated state and while taking into consideration the thermal influence on the thread rolling apparatus body on which the thread rolling die is mounted.

In the head forging step and the thread rolling step, a screw can be produced with excellent productivity by heating the magnesium-based alloy raw material to the specific temperature range, but in order to further enhance the productivity, it is preferable that the raw material is heated also when the procedure is shifted from the head forging step to the thread rolling step. More concretely, moving means which moves a screw blank obtained by the head forging step to the thread rolling die is heated to 100°C or higher and lower than 250°C, thereby heating the screw blank. An example of the moving means is a shoot rail. A shoot rail having a structure used for normal screw working may be used. It is preferable that heating means such as an electric heating type cartridge heater is mounted on the moving means to heat the same. Heating the magnesium-based alloy raw material also when the procedure is shifted from the head forging step to the thread rolling step, i. e. , heating the screw blank previously, can shorten the heating time when the thread rolling is carried out. Thus, the speed of the thread rolling can be increased and the productivity of the screw can be enhanced.

The magnesium-based alloy screw obtained through the above steps has excellent tensile strength of 220 MPa or higher. To further enhance the tensile strength, it is preferable that head working for forming a head portion of a screw and thread rolling for forming a screw thread are carried out and then, the obtained screw is subjected to thermal treatment at 100°C or higher and lower than 350°C. With this thermal treatment, the alloy structure of the screw can be brought into structure having finer crystal grain, and it is possible to obtain a screw having tensile strength as high as 230 MPa or higher.

The present invention is useful for magnesium-based alloy having hcp structure which has poor workability at room temperature (e.g., 20°C) irrespective of alloy composition. For example, it is possible to use casting magnesium-based alloy or flatting magnesium-based alloy. More concretely, examples of the magnesium-based alloy are alloy having Al: 0.1% by mass or more and 12% by mass or less, alloy having Zn: 0.1% by mass or more and 10% by mass or less and Zr: 0.1% by mass or more and 2.0% by mass or less, and alloy having rare-earth element having excellent heat resistance in a range of 5.0% by mass or less. When the alloy has Al, it has at least one or more of Mn: 0.1% by mass or more and 2.0% by mass or less, Zn: 0.1% by mass or more and 5.0% by mass or less, and Si: 0.1% by mass or more and 5.0% by mass or less. As the above ally compositions, it is possible to use AZ, AS, AM, ZK and EZ based alloy and the like in typical ASTM. As the contents of Al, Al in a range of 0.1 to less than 2.0% by mass, and Al in a range of 2.0 or higher to 12.0% by mass may be distinguished from each other. It is general that in addition to the above chemical component, this is used as alloy including Mg and impurities. Examples of the impurities are Fe, Si, Cu, Ni and Ca and the like.

Examples of the AZ-based alloy having 2.0 to 12.0% by mass Al are AZ31, AZ61, AZ91 and the like. The AZ31 is a magnesium-based alloy, for example, containing Al: 2. 5 to 3.5% by mass, Zn: 0.5 to 1.5% by mass, Mn: 0.15 to 0.5% by mass, Cu: 0.05% by mass or less, Si: 0.1% by mass or less, and Ca: 0.04% by mass or less. The AZ61 is a magnesium-based alloy, for example, containing Al: 5.5 to 7.2% by mass, Zn: 0.4 to 1.5% by mass, Mn: 0.15 to 0.35% by mass, Ni: 0.05% by mass or less, and Si: 0.1% by mass or less. The AZ91 is a magnesium-based alloy, for example, containing Al: 8.1 to 9.7% by mass, Zn: 0.35 to 1.0% by mass, Mn: 0.13% by mass or more, Cu: 0.1% by mass or less, Ni: 0.03% by mass or less, and Si: 0.5% by mass or less. Examples of the AZ-based alloy containing Al of 0.1 to less than 2.0% by mass are AZ10, AZ21 and the like. The AZ10 is a magnesium-based alloy, for example, containing Al: 1.0 to 1.5% by mass, Zn: 0.2 to 0.6% by mass, Mn: 0.2% by mass or more, Cu: 0.1% by mass or less, Si: 0.1% by mass or less, and Ca: 0.4% by mass or less. The AZ21 is a magnesium-based alloy, for example, containing Al: 1.4 to 2.6% by mass, Zn: 0.5 to 1.5% by mass, Mn: 0.15 to 0.35 % by mass, Ni: 0.03% by mass or less, and Si: 0.1% by mass or less.

Examples of the AS-based alloy having Al of 2.0 to 12.0% by mass are AS41 and the like. The AS41 is a magnesium-based alloy, for example, containing Al: 3. 7 to 4.8% by mass, Zn: 0.1% by mass or less, Cu: 0.15% by mass or less, Mn: 0.35 to 0.60% by mass, Ni: 0. 001% by mass or less, and Si: 0.6 to 1.4% by mass. Examples of the AS-based alloy having Al of 0.1 to less than 2.0% by mass are AS21 and the like. The AS21 is a magnesium-based alloy, for example, containing Al: 1.4 to 2.6% by mass, Zn: 0. 1% by mass or less, Cu: 0.15% by mass or less, Mn: 0.35 to 0.60% by mass, Ni: 0.001% by mass, and Si: 0.6 to 1.4% by mass.

Examples of the AM-based alloy are AM60, AM100 and the like. The AM60 is a magnesium-based alloy, for example, containing Al: 5.5 to 6.5% by mass, Zn: 0.22% by mass or less, Cu: 0.35% by mass or less, Mn: 0.13% by mass or more, Ni: 0.03% by mass or less, Si: 0.5% by mass or less. The AM100 is a magnesium-based alloy, for example, containing Al: 9.3 to 10.7% by mass, Zn: 0.3% by mass or less, Cu: 0.1% by mass or less, Mn: 0.1 to 0.35% by mass, Ni: 0.01% by mass or less, and Si: 0.3% by mass or less.

Examples of the ZK-based alloy are ZK40, ZK60 and the like. The ZK40 is a magnesium-based alloy, for example, containing Zn: 3.5 to 4.5% by mass, and Zr: 0.45% by mass or more. The ZK60 is a magnesium-based alloy, for example, containing Zn: 4.8 to 6.2% by mass, and Zr: 0.45% by mass or more.

As rare-earth element (RE) contained in the EZ-based alloy, mixture of Pr and Nd is usually used in many cases. Examples of the EZ-based alloy are EZ33 and the like. The EZ33 is a magnesium-based alloy, for example, containing Zn: 2.0 to 3.1% by mass, Cu: 0.1% by mass or less, Ni: 0.01% by mass or less, RE: 2.5 to 4.0% by mass, and Zr: 0.5 to 1% by mass.

It is difficult to obtain sufficient strength with only magnesium, but by containing the above-described chemical components, preferable strength can be obtained.

### Effects of the Invention

In the present invention, heating temperature when a screw is produced can be reduced to lower than 250°C by using drawn material made of magnesium-based alloy as described above. Therefore, according to the invention, when a screw is produced, it is unnecessary to heat the material to a high temperature of 250°C or higher unlike the conventional technique in which extruded material is subjected to screw working as it is. Therefore, it is possible to increase the lifetimes of working tools such as the holding die. Further, according to the invention, high temperature heating means is unnecessary unlike the conventional technique. Therefore, according to the producing method of the present invention, a magnesium-based alloy screw can be obtained with excellent productivity.

A magnesium-based alloy screw obtained by the producing method of the invention has excellent strength. It is possible to obtain a screw having more excellent strength by carrying out specific thermal treatment after the screw working.

### Best Mode for Carrying out the Invention

Embodiments of the present invention will be explained below.

### (Test Example 1-1)

Extruded materials (φ8.0 mm, φ5.25 mm) of magnesium-based alloy (material corresponding to ASTM AZ31) containing Al: 3.0% by mass, Zn: 1.0% by mass, Mn: 0.15%bymass, and balance comprising Mg and impurities were prepared. The extruded material of φ8.0 mm was subjected to drawing to φ5.25 mm at the temperature of about 160°C and working ratio that cross section reduction ratio per one pass was 20% or less (temperature rising speed to 160°C is about 10°C/sec, drawing speed is 16 m/sec) . After the drawing, thermal treatment of 350°C × 15 min was carried out. As a result, the grains were fined by recovery and recrystallization. The structure of the obtained drawn material of φ5.25 mm was checked, the average crystal grain diameter was 7.5 µm, and the maximum crystal grain diameter was 10.2 µm. A drawn material of φ1.66 mm was also prepared under the same conditions (the average crystal grain diameter was 6. 8 µm, and the maximum crystal grain diameter was 9.8 µm).

The long drawn materials (base wires) fo φ5.25 mm and φ1.66 mm obtained through the above procedure, and the long extruded material of φ5.25 mm (the average crystal grain diameter was 28 µm and the maximum crystal grain diameter was 75 µm) which was not subjected to drawing were supplied to the forging apparatus as they are, and a head portion of a screw was formed.

In this example, the head working was carried out using the forging apparatus having the holding die which fixes the wire at the time of the head working and a plurality of punches which form the head portion of the screw. This forging apparatus includes cutting means capable of cutting the supplied long linear material into constant length, and transferring means for transferring the cut wire to the holding die, and the forging apparatus can continuously carrying out the procedure from the cutting operation of the long materials to the forming operation of the head portion.

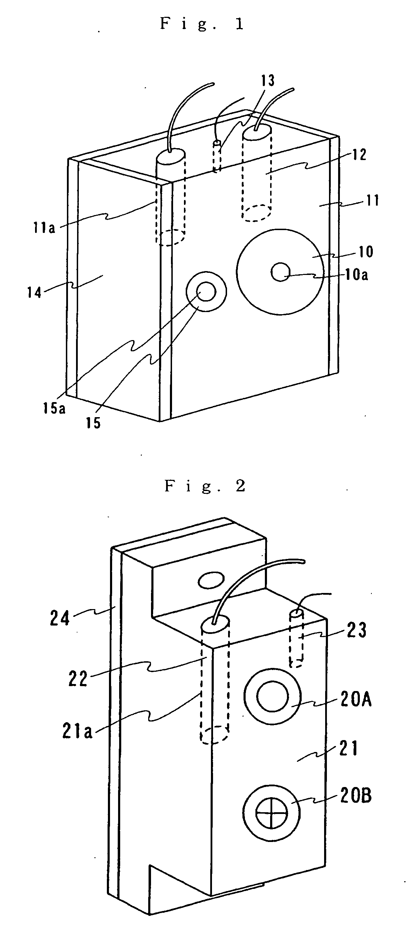

In this example, the holding die and the punches respectively have heating means for heating them. The cut wire can be heated by the heating means through the holding die and the punches. Fig. 1 is a schematic diagram showing structures of the holding die and the cutting die portions in the forging apparatus used for this example. A holding die 10 is fixed to a die holder 11, the die holder 11 is provided with a heater hole 11a, an electric heating type cartridge heater 12 is inserted into the heater hole 11a, and a temperature sensor 13 is also inserted in the same manner in a hole which is separately formed such that the temperature of the die holder 11 can be adjusted. The die holder 11 is fixed to a forging apparatus body (not shown) . Therefore, in the die holder 11, heat insulators 14 are disposed on contact surfaces with respect to the forging apparatus body (left, right and rear three surfaces in Fig. 1), thereby enhancing the thermal efficiency by maintaining the heating temperature of the die holder 11 and protecting the apparatus body. In this example, in addition to the holding die 10, the die holder 11 includes cutting die 15 for holding the wire in the cutting step. Thus, the heater 12 can heat both the holding die 10 and the cutting die 15. By heating the cutting die 15 in the cutting step, when the long materials are cut into wires having constant length, the wire can be heated by heating the cutting die 15. At the same time, the holding die 10 can also be heated.

Fig. 2 is a schematic diagram showing a structure of punch portion in the forging apparatus used in this example. This example includes two punches 20A and 20B. The punch 20A carries out preliminary forming of the screw blank, and the punch 20B can obtain a screw blank having a completed head portion. The punch 20B has a plus head. The punches 20A and 20B are held by a punch holder 21, the punch holder 21 is provided with a heater hole 21a, an electric heating type cartridge heater 22 is inserted into the heater hole 21a, and a temperature sensor 23 is also inserted in the same manner in a hole which is separately formed such that the temperature of the punch holder 21 can be adjusted. This punch holder 21 is also fixed to the forging apparatus body (not shown), a heat insulator 24 is disposed on a contact surface of the punch holder 21 with respect to the forging apparatus body (one rear surface in Fig. 2) to enhance the thermal efficiency and prevent heat emission to the apparatus body.

The procedure from the cutting operation of the long materials to the forming operation of the head portion was continuously carried out in the following manner using the forging apparatus having the above-described structure. First, a long materials are inserted into a cutting blade hole 15a of the cutting die 15 heated by the heater 12 and then, they are cut by a cutter (not shown), the cut wire is transferred to a position of the center hole 10a of the holding die 10 heated by the heater 12 by transferring means (not shown), it is inserted into the center hole 10a by the punch 20A and at the same time, the head working is carried out. With this operation preliminary forming of the screw blank is carried out and then, the head working is carried out by the punch 20B, and a screw blank having a completed head portion is obtained.

By changing the outputs of the heaters 12 and 22 by above procedure using the above forging apparatus, the heating temperatures of the heaters 12 and 22 were changed to change the temperature of the wire, the head working was carried out under various temperature conditions, and it was checked whether the head working could be carried out. In this example, screw blanks for M6 and screw blanks for M2 were produced. A result thereof is shown in Table 1. In Table 1, O shows that headworking could be carried out in two stages, × shows that a crack and the like were generated and head working could not be carried out, and ▲ shows that head working could be carried out in two stages but heating temperature was high and there was a problem in terms of the lifetimes of working tools such as the holding die and punches. The forging speed of the drawn material and the extrudedmaterial was about 120 mm/sec. The wire temperature when the head working was carried out was measured by a contact thermometer.

**Table 1**

| Work piece | Average crystal grain diameter, maximum crystal grain diameter (for M6) | M6 | | M2 | |
|---|---|---|---|---|---|
| | | Temperature of wire (°C) | working can be carried out or not | Temperature of wire (°C) | working can be carried out or not |
| Drawn material | 7.5 µm 10.2 µm | RT | × | RT | × |
| | | 105 | × | 107 | × |
| | | 152 | × | 154 | ○ |
| | | 182 | ○ | 180 | ○ |
| | | 243 | ○ | 240 | ○ |
| | | 266 | ▲ | 265 | ▲ |
| | | 298 | ▲ | 301 | ▲ |
| Extruded material | 28.0 µm 75.0 µm | RT | × | | |
| | | 108 | × | | |
| | | 151 | × | | |
| | | 199 | × | | |
| | | 241 | × | | |
| | | 270 | ▲ | | |
| | | 299 | ▲ | | |

It can be found that when drawn material is used as shown in Table 1, screw blank for M2 can be subjected to head working when the wire temperature is 140°C or higher. It can be found that when the wire temperature is 180°C or higher, even screw blank for large diameter M6 can be subjected to head working. It can be found from Table 1 that when drawn material is used, head forging can sufficiently be carried out even if the wire temperature is lower than 250°C. Especially in this example, the working was carried out at the forging speed of 120 mm/sec that is at industrial production level, and the head working could be carried out without any problem. In this example, working having large working ratio, i.e., plus head was carried out, but in this case also, the head working could sufficiently be carried out even if the wire temperature was lower than 250°C. Even when the wire was heated to higher than 250°C, head working could be carried out. However, in consideration of the lifetimes of working tools such as the holding die and punches, it is preferable to work while heating the wire to lower than 250°C.

Whereas, when extruded material which was not subjected to drawing is used as shown in Table 1, head working could not be carried out without heating the wire to 250°C or higher. The working speed of the head working is lower as compared with a case in which drawn material is used, and it is considered that the productivity is poor.

In this example, the cutting die 15 is heated by the heater 12 of the die holder 11 shown in Fig. 1, and the long materials are indirectly heated by this heating and, then, are cut. Alternatively, a structure for directly heating the long materials may further be provided. For example, a dryer may be provided for directly blowing hot air against the long materials. At that time, the long materials can be heated faster, more stably and sufficiently by the heating operation of the cutting die 15 and the heating operation by the hot air, and the cutting performance can further be enhanced. This is effective especially when a screw having a large diameter exceeding M4 is to be formed.

### (Text Example 1-2)

Similar tests were carried out using magnesium-based alloys having different compositions. That is, after extruded materials were subjected to drawing, drawn materials subjected to thermal treatment were subjected to head working at various temperatures using the same forging apparatus (screw blank for M2 and screw blank for M6 were produced). Compositions of magnesium-based alloys used for the test will be shown below.

A magnesium-based alloy containing Al: 1.2% by mass, Zn: 0.4% by mass, Mn: 0.3% by mass, and balance comprising Mg and impurities (material corresponding to ASTM AZ10)
A magnesium-based alloy containing Al: 6.4% by mass, Zn: 1.0% by mass, Mn: 0.28% by mass, and balance comprising Mg and impurities (material corresponding to ASTM AZ61)
A magnesium-based alloy containing Al: 9.0% by mass, Zn: 0.7% by mass, Mn: 0.1% by mass, and balance comprising Mg and impurities (material corresponding to ASTM AZ91)
A magnesium-based alloy containing Al: 1. 9% by mass, Mn: 0.45% by mass, Si: 1.0% by mass, and balance comprising Mg and impurities (material corresponding to ASTM AS21)
A magnesium-based alloy containing Al: 4.2% by mass, Mn: 0.50% by mass, Si: 1.1% by mass, and balance comprising Mg and impurities (material corresponding to ASTM AS41)
A magnesium-based alloy containing Al : 6.1% by mass, Mn: 0.44% by mass, and balance comprising Mg and impurities (material corresponding to ASTM AM60)
A magnesium-based alloy containing Zn: 5.5% by mass, Zr: 0.45%bymass, and balance comprising Mg and impurities (material corresponding to ASTM ZK60)

With any of the samples, in screw blanks for M2, head working could be carried out by heating the wire to 140°C or higher and lower than 250°C. Even when the wire has large diameter as large as M6, the head working could be carried out by heating the wire to 180°C or higher.

### (Test Example 2-1)

Screw blanks for M2 and Screw blanks for M6 having head portions prepared through the procedure of the test example 1 were subjected to thread rolling.

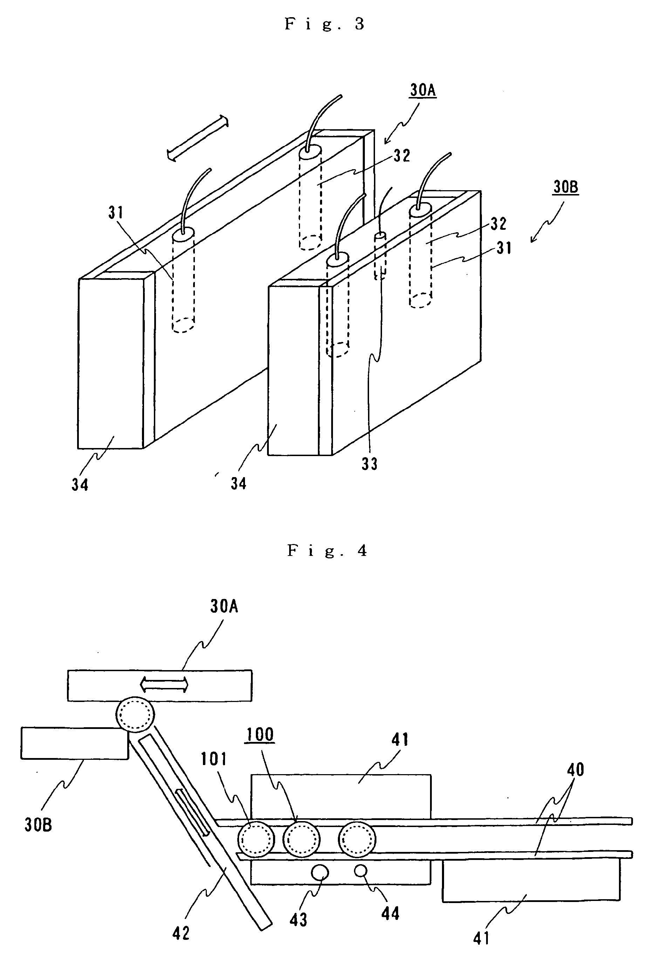

In this example, thread rolling was carried out using a thread rolling apparatus having thread rolling die. Further, in this example, apparatus has heating means capable of heating the thread rolling die so that the screw blank can be heated through the thread rolling die. Fig. 3 is a schematic diagram of a structure of a thread rolling die portion of the thread rolling apparatus used in this example. In the thread rolling die used in this example, a movable die 30A which can slide and a stationary die 30B are opposed to each other, the die 30A and 30B respectively have heater holes 31, and electric heating type cartridge heaters 32 are inserted into the heater holes 31, respectively. The stationary die 30B is separately provided with a hole so that the temperature thereof can be adjusted, and a temperature sensor 33 is inserted into this hole. The movable die 30A and the stationary die 30B are fixed to a thread rolling apparatus body (not shown). To enhance the thermal efficiency and to protect the apparatus body, in the moving die 30A and the stationary die 30B, heat insulators 34 are disposed on contact surfaces with respect to the thread rolling apparatus body (in Fig. 3, left, front and rear three surfaces in the case of the moving die 30A, and right, front and rear three surfaces in the case of the stationary die 30B). Grooves (not shown) are formed in opposed surfaces of the die 30A and 30B for forming a screw thread on a shaft portion of the screw blank, the shaft portion of the screw blank is disposed between the opposed surfaces, the moving die 30A is slid, thereby carrying out the thread rolling.

Further, a thread rolling apparatus has a shoot rail which moves the screw blank to the thread rolling die. In this example, a thread rolling apparatus which has a shoot rail including heating means is utilized. The screw blank is preliminarily heated by the heating means. Fig. 4 is a schematic diagram showing structures of the shoot rail portion and the thread rolling die portion of the thread rolling apparatus used in this example. The shoot rail 40 arranges screw blanks 100 obtained in the head forging step, and moves the screw blanks 100 toward the thread rolling die. The shoot rail 40 sandwiches a shaft portion 101 of the screw blank 100. The shoot rail 40 is fixed by a support member 41. A rod 42 which moves the screw blank 100 is provided between the moving die 30A and the stationary die 30B. In this example, an electric heating type cartridge heater 43 is disposed outside of the shoot rail 40, and a temperature sensor 44 is disposed to adjust the temperature.

Using the thread rolling apparatus, output of the heater 32 was changed to change the heating temperature of the thread rolling die, the temperature of the screw blank was changed, screw blank for M2 and screw blank for M6 obtained in the test example 1 were subjected to thread rolling at various temperatures, and it was checked whether thread rolling could be carried out. A result thereof is shown in Table 2. In Table 2, ○ shows that thread rolling could be carried out, △ shows that thread rolling could be carried out but fine cracks were generated, × shows that cracks and the like were generated and thread rolling could not be carried out, and ▲ shows that thread rolling could be carried out but heating temperature was high and there was a problem in terms of the lifetimes of working tools such as the thread rolling die.

**Table 2**

| Work piece | Heating temperature (°C) of thread rolling die | working can be carried out or not | |
|---|---|---|---|
| | | M6 | M2 |
| Drawn material | RT | × | × |
| | 100 | △ | ○ |
| | 150 | ○ | ○ |
| | 200 | ○ | ○ |
| | 240 | ○ | ○ |
| | 260 | ▲ | ▲ |
| | 290 | ▲ | ▲ |
| Extruded material | RT | × | |
| | 100 | × | |
| | 150 | × | |
| | 200 | × | |
| | 240 | × | |
| | 260 | ▲ | |
| | 290 | ▲ | |

It can be found from Table 2 that when screw blank made of drawn material is used, the screw blank is heated by heating the thread rolling die to 100°C or higher, and the thread rolling can be carried out. It can be found from Table 2 that even if the heating temperature of the thread rolling die is lower than 250°C, the thread rolling can sufficiently be carried out. Especially when the screw had a large diameter as large as M6, the thread rolling could sufficiently be carried out with heating temperature of the thread rolling die of 150°C or higher. Even if the thread rolling die is heated to higher than 250°C, thread rolling could be carried out. However, in consideration of the lifetimes of working tools such as the thread rolling die, it is desired to work by heating the thread rolling die lower than 250°C.

The strength of the obtained M6 screws were checked, and it was found that a torsion fracture torque was 3.5 to 4.5Nm, and the screws have excellent strength.

Whereas, when screw blanks made of extruded material which is not subjected to drawing as shown in Table 2 are used, when the thread rolling die is not heated to 250°C or higher, thread rolling can not be carried out.

### (Test Example 2-2)

Similar tests were carried out using magnesium-based alloys having different compositions. That is, screw blanks (for M2 and M6) produeced in the test example 1-2 were subjected to thread rolling using thread rolling die which were heated at various temperatures. As the magnesium-based alloys, the following materials having the same compositions as those shown above were used, i.e., a material corresponding to AZ10, a material corresponding to AZ61, a material corresponding to AZ91, a material corresponding to AS21, a material corresponding to AS41, a material corresponding to AM60 and a material corresponding to ZK60.

As a result of the test, with any of the samples, thread rolling could be carried out sufficiently by heating the thread rolling die to 100°C or higher and lower than 250°C like the test example 2-1. Even if the diameter of the sample was as large as M6, thread rolling could sufficiently be carried out by heating the same to 150°C or higher like the test example 2-1.

### (Test Example 3)

In the same manner as those of the test examples 1 and 2, drawn material was subjected to head working for forming head portion and thread rolling for forming screw thread to obtain screws, and the obtained screws were subjected to thermal treatment at various temperatures, and tensile characteristics and toughness of the obtained screws were evaluated. In this test, tensile strength was measured as the tensile characteristics. As the toughness, head striking test described in JIS B1051 was carried out, and it was checked whether there existed a crack.

Drawn material having the same composition as that of the test example 1-1 was produced under the same condition, and such drawn materials were used in this example (φ5.25 mm, average crystal grain diameter is 7.5 µm, maximum crystal grain diameter is 10.2 µm).

The drawn material was subjected to the head working under the same condition as that of the test example 1-1. Screw blank subjected to the head working was subjected to thread rolling under the same condition as that of the test example 2-1 (heating temperature was 150°C).

A result of the test is shown in Table 3. In Table 3, the term "forging temperature" means temperature directly measured from a wire using a contact thermometer. The term "thread rolling temperature" means temperature measured from thread rolling die by a temperature sensor of the thread rolling die. Thermal treatment was carried out for 15 minutes at each annealing temperature.

**Table 3**

| Work piece | Forging temperature (°C) | Thread rolling temperature (°C) | Annealing temperature (°C) | Tensile strength MPa | Result of head striking test |
|---|---|---|---|---|---|
| Drawn material | 182 | 150 | Not heated | 227 | Satisfactory (no crack) |
| | | | 100 | 235 | Satisfactory (no crack) |
| | | | 150 | 248 | Satisfactory (no crack) |
| | | | 200 | 240 | Satisfactory (no crack) |
| | | | 250 | 236 | Satisfactory (no crack) |
| | | | 300 | 230 | Satisfactory (no crack) |
| | | | 350 | 233 | Satisfactory (no crack) |
| | | | 400 | 227 | Satisfactory (no crack) |

As shown in Table 3, it can be found that when screw working is carried out using drawn material, the screw can be produced sufficiently even it is heated lower than 250°C, and a screw having tensile strength as high as 220 MPa or higher and excellent toughness can be obtained. Especially, it can be found that subjecting the screw to thermal treatment after the screw working further enhances tensile strength. It can be found from Table 3 that the temperature of the thermal treatment is preferably in a range of 100 to 350°C. **Industrial Applicability**

The producing method of magnesium-based alloy screw of the present invention is optimal for obtaining a magnesium-based alloy screw having excellent tensile characteristics. Especially, the producing method of the invention has lower working temperature when screw working is carried out and has excellent productivity. Therefore, the producing method of the invention can be applied when a magnesium-based alloy screw having excellent strength is to be obtained with excellent productivity. The obtained magnesium-based alloy screw can be utilized in a field where high strength is required.

### Brief Description of the Drawings

[Fig. 1] Fig. 1 is a schematic diagram of structures of holding die and cutting die portions in a forging apparatus used in a test example 1.
[Fig. 2] Fig. 2 is a schematic diagram of a structure of a punch portion in the forging apparatus used in the test example 1.
[Fig. 3] Fig. 3 is a schematic diagram of a structure of thread rolling die portion in a thread rolling apparatus used in a test example 2.
[Fig. 4] Fig. 4 is a schematic diagram of structures of shoot rail and thread rolling die portions in the thread rolling apparatus used in the test example 2.

### Explanation of letters or numerals

10 holding die, 10a center hole, 11 die holder, 11a heater hole, 12 heater, 13 temperature sensor, 14 heat insulator, 15 cutting die, 15a cutting blade hole, 20A, 20B punch, 21 punch holder, 21a heater hole, 22 heater, 23 temperature sensor, 24 heat insulator, 30A movable die, 30B stationary die, 31 heater hole, 32 heater, 33 temperature sensor, 34 heat insulator, 40 shoot rail, 41 support member, 42 rod, 43 heater, 44 temperature sensor, 100 screw blank, 101 shaft portion

## Claims

1. A method of producing a magnesium-based alloy screw comprising:
a preparing step in which a drawn wire is prepared made of a magnesium-based alloy comprising either: (a) Al: 0.1 to 12% by mass and one or more of Mn: 0.1 to 2.0% by mass, Zn: 0.1 to 5.0% by mass and Si: 0.1 to 5.0% by mass, reminder Mg and usual impurities, or (b) Zn: 0.1 to 10% by mass and Zr: 0.1 to 2.0% by mass, reminder Mg and usual impurities;
a head forging step in which a head working for forming a head portion is carried out by warm working to produce a screw blank,
a thread rolling step in which thread rolling for forming screw thread on the screw blank is carried out by warm working to produce a screw,
and optionally a thermal treatment step in which a screw subjected to the thread rolling is subjected to thermal treatment at 100°C or higher and lower than 350°C,
wherein the headworking in the head forging step is carried out using a holding die which fixes the drawn wire and a punch which forms a head portion of the screw, the holding die and the punch are heated, in which at least the holding die is heated to 140°C or higher and 250°C or lower, thereby heating the wire to 140°C or higher and lower than 250°C.

2. The method according to claim 1, wherein the thread rolling is carried out using a thread rolling die heated to 100°C or higher and lower than 250°C.

3. The method according to claim 1, wherein average crystal grain diameter of the magnesium-based alloy is 10 µm or less, and maximum crystal grain diameter thereof is 15 µm or less.

4. The method according to claim 1, wherein the holding die and the punch are respectively fixed to a die holder and a punch holder respectively including a heating means, the holding die and the punch are heated by the heating means,
at least a portion of an outer periphery of the holder is provided with a heat insulator, a heated state of the holding die and punch is maintained by the heat insulator.

5. The method according to claim 1, wherein the following steps are continuously carried out:
a supplying step for supplying to a cutting means the drawn wire,
a cutting step for cutting the supplied wire into pieces each having a constant length by the cutting means, thereby obtaining a wire as a work piece,
a transferring step for transferring the cut wire to forging means, and
a head forging step for forming a head portion of a screw on the transferred wire.

6. The method according to claim 5, wherein
the cutting means includes cutting die which hold the wire,
the holding die is fixed to a die holder including a heating means which can heat, the holding die is heated by the heating means,
the cutting die is fixed to the die holder of the holding die,
the cutting step is carried out in such a manner that the wire is held by the cutting die, the cutting die is heated by the heating means of the die holder, thereby heating the wire.

7. The method according to claim 6, wherein in the cutting step, the wire is heated both by a wire heating means for directly heating the wire and by the cutting die which is heated by the heating means of the die holder,
and the cutting die cuts the heated wire.

8. The method according to claim 1, wherein working speed of the head working is 100 mm/sec or higher.

9. The method according to claim 1, wherein the thread rolling die include a heating means capable of heating the thread rolling die, the thread rolling die is heated by the heating means, a heat insulator is disposed such as to surround an outer periphery of the thread rolling die, and a heated state of the die is maintained by the heat insulator.

10. The method according to claim 1, further comprising a step in which moving means moves the screw blank obtained in the head forging step to the thread rolling die, the moving means is heated to 100°C or higher and lower than 250°C.

## Patentansprüche

1. Verfahren zum Herstellen einer Schraube aus einer auf Magnesium basierenden Legierung, das umfasst:
einen Vorbereitungsschritt, bei dem ein gezogener Draht vorbereitet wird, der aus einer auf Magnesium basierenden Legierung besteht, die entweder: (a) Al: 0,1 bis 12% an Masse und eines oder mehrere von Mn: 0,1 bis 2,0% an Masse, Zn: 0,1 bis 5,0% an Masse und Si: 0,1 bis 5,0% an Masse, wobei der Rest Mg und übliche Fremdstoffe sind, oder (b) Zn: 0,1 bis 10% an Masse und Zr: 0,1 bis 2,0% an Masse, wobei der Rest Mg und übliche Fremdstoffe sind, umfasst,
einen Kopfformungsschritt, bei dem eine Kopfbearbeitung zum Ausbilden eines Kopfabschnitts durch Warmbearbeitung durchgeführt wird, um einen Schraubenrohling herzustellen,
einen Gewindewalzschritt, bei dem ein Gewindewalzen zum Ausbilden eines Schraubengewindes an dem Schraubenrohling durch Warmbearbeitung durchgeführt wird, um eine Schraube herzustellen,
und wahlweise einen Wärmebehandlungsschritt, bei dem eine dem Gewindewalzen unterzogene Schraube einer Wärmebehandlung bei 100° C oder mehr und weniger als 350° C unterzogen wird,
wobei die Kopfbearbeitung bei dem Kopfformungsschritt unter Verwendung eines Haltewerkzeugs, das den gezogenen Draht befestigt, und eines Stempels, der einen Kopfabschnitt der Schraube ausbildet, durchgeführt wird und das Haltewerkzeug und der Stempel erwärmt werden, wobei zumindest das Haltewerkzeug auf 140° C oder mehr und 250° C oder weniger erwärmt wird, wodurch der Draht auf 140° C oder mehr und weniger als 250° C erwärmt wird.

2. Verfahren nach Anspruch 1, bei dem das Gewindewalzen unter Verwendung eines Gewindewalzwerkzeugs durchgeführt wird, das auf 100° C oder mehr und weniger als 250° C erwärmt ist.

3. Verfahren nach Anspruch 1, bei dem der durchschnittliche Kristallkorndurchmesser der auf Magnesium basierenden Legierung 10 µm oder weniger und der maximale Kristallkorndurchmesser derselben 15 µm oder weniger beträgt.

4. Verfahren nach Anspruch 1, bei dem das Haltewerkzeug und der Stempel jeweils an einem Werkzeughalter und einem Stempelhalter befestigt sind, die jeweils ein Erwärmungsmittel beinhalten, und das Haltewerkzeug und der Stempel durch das Erwärmungsmittel erwärmt werden,
wobei zumindest ein Abschnitt eines äußeren Umfangs des Halters mit einem Wärmeisolator versehen ist und ein erwärmter Zustand des Haltewerkzeugs und des Stempels durch den Wärmeisolator aufrechterhalten wird.

5. Verfahren nach Anspruch 1, bei dem die folgenden Schritte kontinuierlich durchgeführt werden:
ein Zuführschritt zum Zuführen des gezogenen Drahts zu einem Schneidemittel,
ein Schneideschritt zum Schneiden des zugeführten Drahts durch das Schneidemittel in Stücke, von denen jedes eine konstante Länge aufweist, wodurch ein Draht als ein Werkstück erhalten wird,
einen Überführungsschritt zum Überführen des geschnittenen Drahts zu einem Formungsmittel und
einen Kopfformungsschritt zum Ausbilden eines Kopfabschnitts einer Schraube an dem überführten Draht.

6. Verfahren nach Anspruch 5, bei dem
das Schneidemittel ein Schneidewerkzeug beinhaltet, das den Draht hält,
das Haltewerkzeug an einem Werkzeughalter befestigt ist, der ein Erwärmungsmittel, das erwärmen kann, beinhaltet, wobei das Haltewerkzeug durch das Erwärmungsmittel erwärmt wird,
das Schneidewerkzeug an dem Werkzeughalter des Haltewerkzeugs befestigt ist,
der Schneideschritt auf eine solche Weise durchgeführt wird, dass der Draht durch das Schneidewerkzeug gehalten wird und das Schneidewerkzeug durch das Erwärmungsmittel des Werkzeughalters erwärmt wird, wodurch der Draht erwärmt wird.

7. Verfahren nach Anspruch 6, bei dem bei dem Schneideschritt der Draht sowohl durch ein Drahterwärmungsmittel zum direkten Erwärmen des Drahts als auch durch das Schneidewerkzeug, das durch das Erwärmungsmittel des Werkzeughalters erwärmt wird, erwärmt wird,
und das Schneidewerkzeug den erwärmten Draht schneidet.

8. Verfahren nach Anspruch 1, bei dem die Bearbeitungsgeschwindigkeit der Kopfbearbeitung 100 mm/Sek oder mehr beträgt.

9. Verfahren nach Anspruch 1, bei dem das Gewindewalzwerkzeug ein Erwärmungsmittel beinhaltet, das geeignet ist, das Gewindewalzwerkzeug zu erwärmen, das Gewindewalzwerkzeug durch das Erwärmungsmittel erwärmt wird, ein Wärmeisolator so angeordnet ist, dass er einen äußeren Umfang des Gewindewalzwerkzeugs umgibt, und ein erwärmter Zustand des Werkzeugs durch den Wärmeisolator aufrecht erhalten wird.

10. Verfahren nach Anspruch 1, das ferner einen Schritt umfasst, bei dem ein Bewegungsmittel den in dem Kopfformungsschritt erhaltenen Schraubenrohling zu dem Gewindewalzwerkzeug bewegt, wobei das Bewegungsmittel auf 100° C oder mehr und weniger als 250° C erwärmt wird.

## Revendications

1. Procédé de production d'une vis en alliage à base de magnésium comprenant :
une étape de préparation dans laquelle est préparé un fil étiré constitué par un alliage à base de magnésium comprenant : (a) Al : 0,1 à 12 % en masse et un ou plusieurs de Mn : 0,1 à 2,0 % en masse, Zn : 0,1 à 5,0 % en masse et Si : 0,1 à 5,0 % en masse, le reste étant Mg et les impuretés habituelles, ou (b) Zn : 0,1 à 10 % en masse et Zr : 0,1 à 2,0 % en masse, le reste étant Mg et les impuretés habituelles ;
une étape de forgeage de tête dans laquelle un formage de tête pour former une partie de tête est réalisé par formage à chaud pour produire une ébauche de vis,
une étape de laminage de filet dans laquelle un laminage de filet pour former un filet de vis sur l'ébauche de vis est réalisé par formage à chaud pour produire une vis,
et éventuellement une étape de traitement thermique dans laquelle une vis soumise au laminage de filet est soumise à un traitement thermique à 100°C ou plus et à moins de 350°C,
où le formage de tête dans l'étape de forgeage de tête est réalisé au moyen d'une matrice de maintien qui fixe le fil étiré et d'un poinçon qui forme une partie de tête de la vis, la matrice de maintien et le poinçon sont chauffés, où au moins la matrice de maintien est chauffée à 140°C ou plus et 250°C ou moins, ce qui chauffe le fil à 140°C ou plus et à moins de 250°C.

2. Procédé selon la revendication 1 où le laminage de filet est réalisé au moyen d'une matrice de laminage de filet chauffée à 100°C ou plus et à moins de 250°C.

3. Procédé selon la revendication 1 où le diamètre moyen des grains cristallins de l'alliage à base de magnésium est 10 µm ou moins, et son diamètre maximal des grains cristallins est 15 µm ou moins.

4. Procédé selon la revendication 1 où la matrice de maintien et le poinçon sont fixés respectivement à un dispositif de maintien de matrice et un dispositif de maintien de poinçon incluant respectivement un moyen de chauffage, la matrice de maintien et le poinçon sont chauffés par les moyens de chauffage,
au moins une partie d'une périphérie externe du dispositif de maintien est munie d'un isolant thermique, un état chauffé de la matrice de maintien et du poinçon est maintenu par l'isolant thermique.

5. Procédé selon la revendication 1 où les étapes suivantes sont réalisées en continu :
une étape d'apport pour apporter à un moyen de coupe le fil étiré,
une étape de coupe pour couper le fil apporté en éléments ayant chacun une longueur constante par le moyen de coupe, pour obtenir un fil en tant que pièce,
une étape de transfert pour transférer le fil coupé à un moyen de forgeage, et
une étape de forgeage de tête pour former une partie de tête d'une vis sur le fil transféré.

6. Procédé selon la revendication 5 où
le moyen de coupe inclut une matrice de coupe qui maintient le fil,
la matrice de maintien est fixée à un dispositif de maintien de matrice incluant un moyen de chauffage qui peut chauffer, la matrice de maintien est chauffée par le moyen de chauffage,
la matrice de coupe est fixée au dispositif de maintien de matrice de la matrice de maintien,
l'étape de coupe est réalisée de telle manière que le fil est maintenu par la matrice de coupe, la matrice de coupe est chauffée par le moyen de chauffage du dispositif de maintien de matrice, ce qui chauffe le fil.

7. Procédé selon la revendication 6 où, dans l'étape de coupe, le fil est chauffé par un moyen de chauffage de fil pour chauffer directement le fil et par la matrice de coupe qui est chauffée par le moyen de chauffage du dispositif de maintien de matrice,
et la matrice de coupe coupe le fil chauffé.

8. Procédé selon la revendication 1 où la vitesse de formage du formage de tête est 100 mm/s ou plus.

9. Procédé selon la revendication 1 où la matrice de laminage de filet inclut un moyen de chauffage capable de chauffer la matrice de laminage de filet, la matrice de laminage de filet est chauffée par le moyen de chauffage, un isolant thermique est disposé de manière à entourer une périphérie externe de la matrice de laminage de filet, et un état chauffé de la matrice est maintenu par l'isolant thermique.

10. Procédé selon la revendication 1 comprenant en outre une étape dans laquelle un moyen de déplacement déplace l'ébauche de vis obtenue dans l'étape de forgeage de tête jusqu'à la matrice de laminage de filet, le moyen de déplacement est chauffé à 100°C ou plus et à moins de 250°C.
